# EUROPEAN PATENT SPECIFICATION

(11) **EP 2 671 440 B1**
(45) Date of publication and mention of the grant of the patent: **24.06.2015**
(21) Application number: 13158362.7
(22) Date of filing: 08.03.2013
(51) Int. Cl.: A01B 59/06, A01B 59/00

(54) **Tractor three-point linkage**
Traktor-Dreipunkteverbindung
Attelage trois points de tracteur

(30) Priority: 08.06.2012 GB 201210129
(43) Date of publication of application: 11.12.2013
(73) Proprietor: AGCO International GmbH, 8212 Neuhausen am Rheinfall (CH)
(72) Inventor: Wolfle, Gottlieb, 87616 Marktoberdorf (DE)
(74) Representative: AGCO Intellectual Property Department

(56) References cited:
- EP-A1- 1 332 657
- EP-A1- 2 274 968
- US-A1- 2003 085 047
- US-A1- 2008 302 547

## Description

The invention relates to lower lift arms of three point linkages employed on agricultural tractors for the mounting of various implements. More specifically the invention relates to the mechanism by which lift rods are connected to the lower lift arms, said mechanism permitting switching between a fixed relationship and a floating relationship wherein the lift arm can move within a permitted range.

Three point linkages have been employed on agricultural tractors for many decades and, since Harry Ferguson's draft control invention of the 1920s, three-point linkages have become the standard means to mount implements on the rear and, more latterly, the front of the tractor.

Implements requiring draft control such as ploughs require a fixed positional relationship between the lift rods of the linkage and the lift arms. This allows accurate control of the plough's position which is desirable when operating with draft control. Some implements, however, operate more effectively when the lift arms can move or 'float' within a permitted range with respect to the lift rods. For example, pasture toppers follow the contours of the ground and so the left-hand side of the implement should be given the freedom to ride over bumps independently of the right-hand side. To cater for this, elongated slots are provided in the lift rods to permit a pin connected to the associated lift arm to slide up and down within a range defined by the elongated slot. Document EP 1 332 657 A discloses such a tractor linkage according to the preamble of claim 1.

When not in use the lift arms can present an obstacle to trailer drawbars connected centrally at the rear of the tractor chassis. When executing a sharp turn, the linkage arms can be known to strike the drawbar of the attached implement. Depending on the geometry of the linkage and the attached implement this problem can sometimes be overcome by the lowering of the lift arms to their lowest limit. Likewise, attempts have been made to provide raised 'transport' positions for the lift arms, an example of which being disclosed in European Patent EP-2,130,420.

It is an objective of the invention to provide a tractor linkage having an alternative mechanism to provide a raised transport position to overcome the aforementioned problems associated with striking draw bars.

In accordance with the invention there is provided a tractor linkage for mounting to a chassis, the linkage comprising a lift arm for pivotally mounting at one end on the chassis and comprising at the other end implement connector means, the linkage further comprising a lift rod for connection at one end to a hitch actuator and connected at the other end to the lift arm, wherein the lift rod comprises a pair of downwardly-extending parallel jaw elements spaced apart to receive the lift arm, wherein the arm is held within the pair of jaw elements by a pin which is inserted through elongated holes provided in each jaw element and a hole in the lift arm, the pin comprising at opposing ends retaining means and a rectangular end member, wherein the pin can be located with respect to the jaw elements in:
(a) a *fixed operative* mode in which the pin is secured at the bottom of the elongated hole wherein a long edge of the rectangular member abuts lower edges of respective stop elements provided on the outside of the jaw elements positioned on either side of the elongated hole;
(b) a *floating operative* mode in which the long edge is aligned with the elongated hole so that the width of the rectangular member fits between the stop elements and is guided thereby to allow the pin to move along the elongated hole; and,
(c) a *fixed transport* mode in which the pin is secured at the top of the elongated hole wherein a long edge of the rectangular member abuts upper edges of the respective stop elements.

By simple extension of the elongated slots in the lift rods the rectangular member can abut the top edges of the stop elements, thereby locking the lift arm in a raised transport position clear of any drawbar during turning. Advantageously, the modification is extremely simple and cheap to implement. There is no need for additional components and the adaption to existing systems merely requires changing the dimensions of the elongated slots.

By lengthening the elongated slot the range of travel when in the floating operative mode is extended in comparison to existing constructions. However, the extension of range applies to the upper limit of travel and thus does not result in lowering of the implement, thus maintaining the implement ground clearances required.

In an preferred embodiment the pin has disposed thereon a rectangular washer between the retaining means and the lift rod, the washer having a long edge which abuts respective stop elements provided on the outside of the proximate jaw element positioned on either side of the elongated hole when in the fixed operative mode and the fixed transport mode, and having a width that fits between the stop elements when in the floating operative mode. As in known systems, a rectangular washer is provided on the side of the jaw elements remote to the rectangular end member, thereby providing symmetry and avoiding twisting forces during lifting.

The retaining means may comprise a sprung clip inserted in a hole in the pin. For example this may include an R-clip or a lynch pin.

In an alternative arrangement, a longer pin maybe provided to accommodate a coil spring disposed in compression between the retaining means and the rectangular washer. Advantageously, this avoids the need to remove any components when changing the mode of operation.

In yet another alternative arrangement intermediate retaining means may be provided on the pin immediately adjacent the rectangular washer, the pin being of a sufficient length to permit the rectangular end member to be slid clear of the stop elements with the intermediate retaining means removed and the end retaining means in place. Advantageously, this avoids the need for a coil spring and permits the changing of arm position or mode with a free hand.

The invention lends itself particularly well to use on agricultural tractors having a chassis to which two lift arms of the kind described are pivotally attached at the rear of the tractor and a drawbar is centrally located between two lift arms. It is envisaged, however, that the invention is applicable to other vehicles such as plant machinery.

Further details of the invention will become clear from reading the following description of specific embodiments with reference to the appended drawings in which:-
Figure 1 is a perspective view of a tractor linkage in accordance with a first embodiment of the invention shown in the fixed operative mode;
Figure 2 is a perspective view of the tractor linkage of Figure 1 shown in the fixed transport mode;
Figure 3 is a perspective view of a tractor transaxle fitted with the tractor linkage of Figure 1 showing the lift rod and associated components in exploded form;
Figure 4 is a vertical section through the lift rod of Figure 1 and shown in the fixed operative mode;
Figure 5 is a vertical section through the lift rod of Figure 1 showing the pin in the transport mode;
Figure 6 is a vertical section through a lift rod of a tractor linkage in accordance with a second embodiment of the invention showing the pin in the fixed operative mode;
Figure 7 is a vertical section through the lift rod of Figure 6 showing the pin in the fixed operative mode with the coil spring and washer retracted;
Figure 8 is a vertical section through the lift rod of Figure 6 showing the pin in the transport mode;
Figure 9 is a vertical section through a lift rod in accordance with a third embodiment showing the pin in the fixed operative mode; and,
Figure 10 is a vertical section through the lift rod of Figure 9 showing the pin in the transport mode.

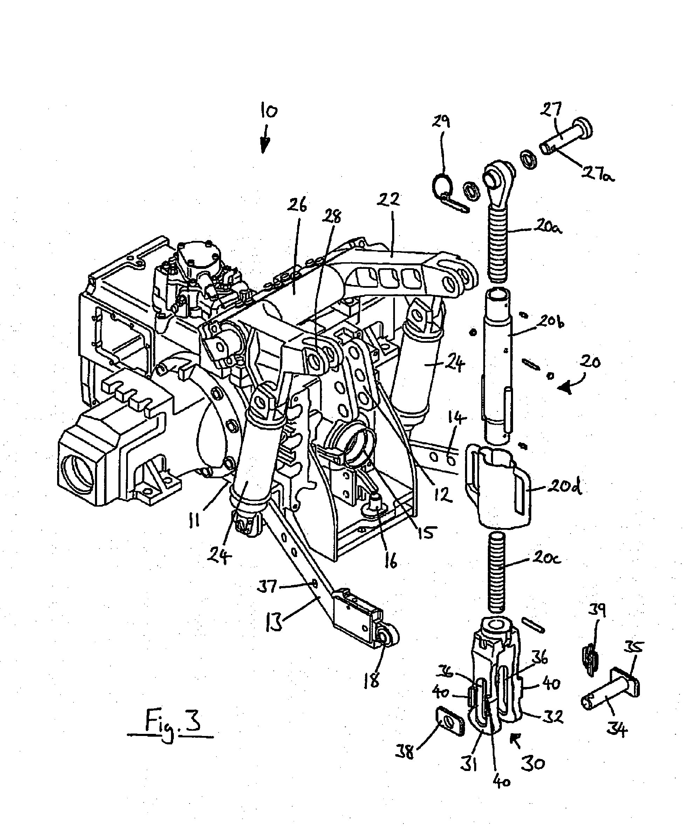

With reference to Figure 3, an agricultural tractor transaxle 10 provides a chassis or frame to which a three-point linkage is mounted. The three-point linkage includes a top link connection point 12 and two lift arms 13, 14. Each lift arm 13, 14 takes a similar construction. The following description, although made with reference to left hand lift arm 13, will apply to the construction of both sides.

Remaining with Figure 3, and for orientation of the addressee, the transaxle 10 is provided with a rear PTO output 15 and a drawbar coupling 16.

Lift arm 13 is pivotally connected at its forward end to chassis 11. At its rear-most end, lift arm 13 includes implement connector means in the form of a ball joint holder 18 (shown with a fixed ball joint coupling in Figure 3). A lift rod (designated generally at 20) connects the lift arm 13 to a rocker shaft 22 in a known manner. A pair of hitch actuators 24 are connected between the chassis 11 and rocker shaft 22, the latter being pivotally mounted around a transverse axis by means of bushing 26 secured on top of the transaxle. Lift actuators are controlled by the application of pressurised fluid in a known manner to lift and lower the lift arms 13, 14.

Turning briefly to the construction of lift rod 20, an upper screw-threaded part 20a is secured by a pin 27 to a jaw 28 integrated with the rocker shaft 22. A sprung lynch pin 29 is in inserted through hole 27a in pin 27 to secure the latter in place. Screw threaded part 20a is received in sleeve 20b which comprises a conforming screw-threaded inside wall. Likewise, screw-threaded lower part 20c is received in the bottom of sleeve 20b.

By rotation of sleeve 20b (assisted by handle 20d) the separation between upper and lower parts 20a, 20c can be adjusted, thereby providing independent height adjustment for lift arm 13, 14.

The lift rod 20 further comprises a jaw member 30 which includes a threaded orifice to receive the lower most end of lower part 20c. Jaw member 30 includes a pair of downwardly extending parallel jaw elements 31, 32, spaced apart to receive the lift arm 13 therebetween.

A pin 34 comprising a rectangular end member 35 is inserted through elongated slots 36 provided in the jaw elements 31, 32 and through a hole 37 provided in the lift arm 13. A rectangular washer 38 is placed upon the pin 34 before securing in place by sprung lynch pin 39.

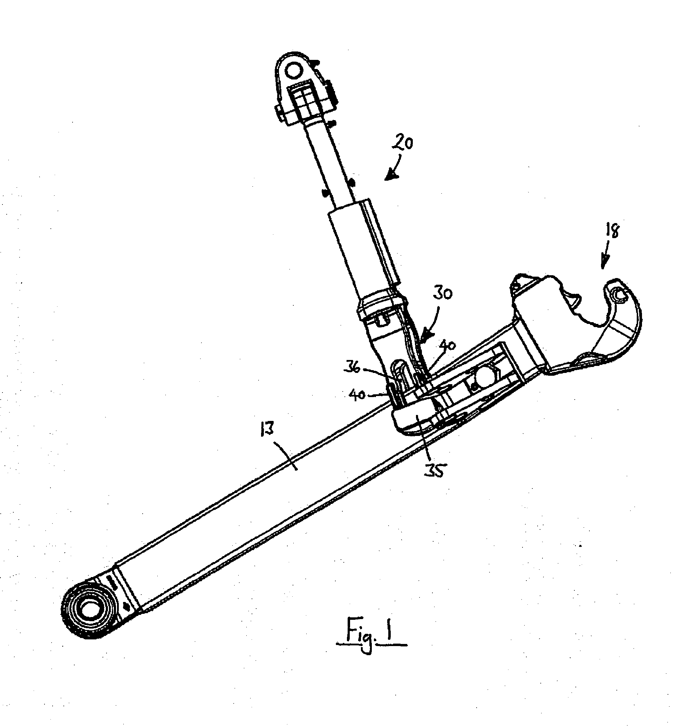

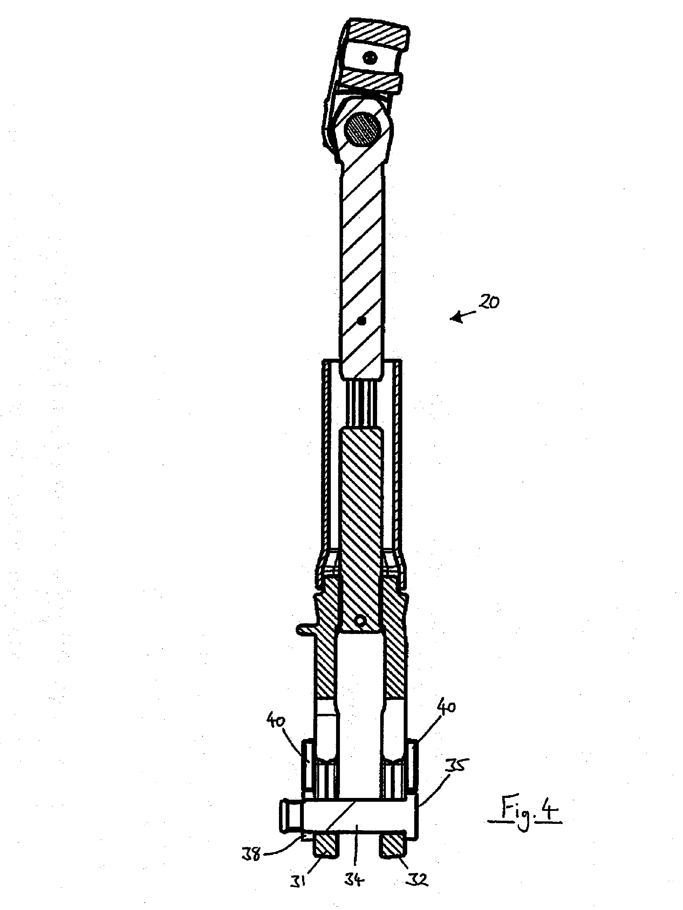

In a fixed operative mode shown in Figures 1 and 4 the rectangular end member 35 and washer 38 are oriented horizontally so that upper edges thereof abut protrusions (or stop elements) 40 provided in pairs on each jaw element 31, 32 either side of elongated slots 36. The interaction between the rectangular members 35, 38 and the stop members 40 secures the pin 34 at the bottom of elongated slots 36. This *fixed* operative mode is provided for the majority of mounted implements such as ploughs, fertilizer spreaders and mowers.

For mounted implements which trace the ground contours, a *floating* operative mode is used in which the rectangular members 35, 38 are rotated through 90 degrees which permits the pin 34 to slide up and down in elongated slots 36. To change between the fixed operative mode and floating operative mode the lynch pin 39 is simply removed together with the washer 38 and the pin 34 is then manipulated into position before replacing the washer 38 and pin 39. It should be appreciated that the floating operative mode is not illustrated in the drawings but is well known in the art.

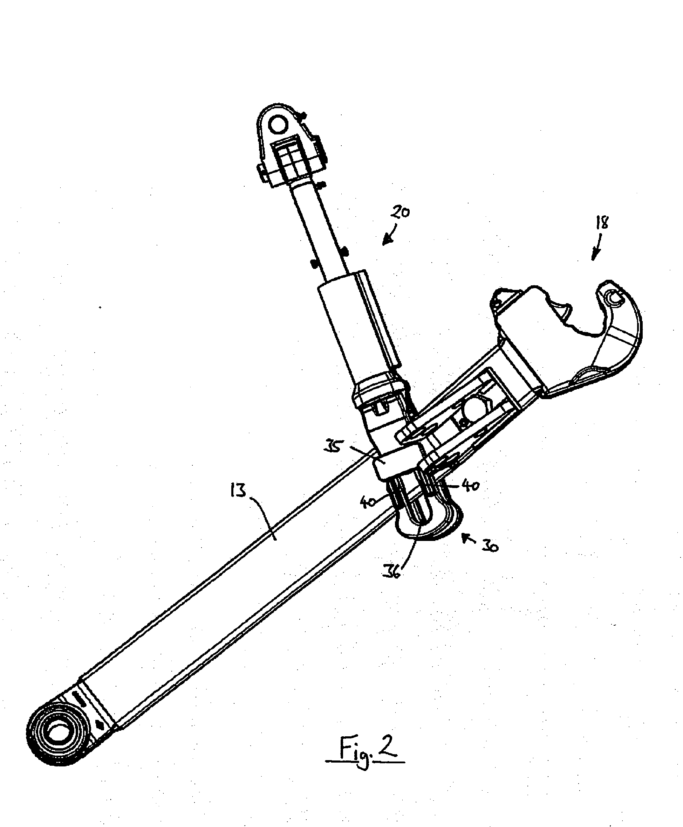

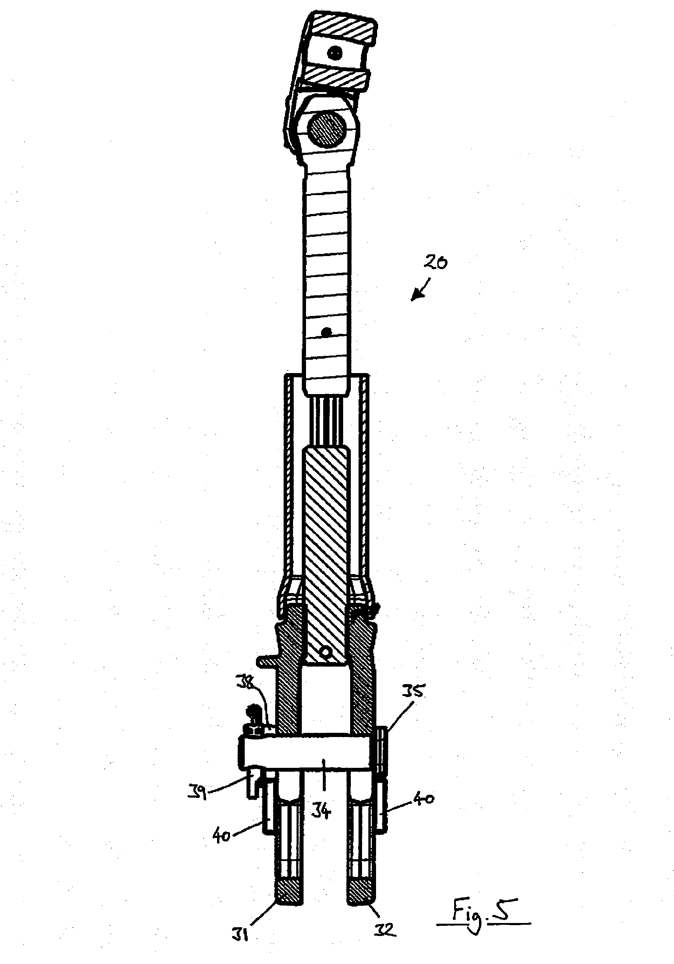

In accordance with the invention, when required, the pin 34 can be held at the top of travel defined by the slots 36 by orientating the rectangular members 35, 38 as in the fixed operative mode but above the stop members 40. By simply removing the lynch pin 39 and washer 38, the pin 34 and rectangular member 35 can simply be manipulated into the position (shown in Figures 2 and 5) before replacing the pin and washer.

It should be appreciated that when in the fixed transport mode the safe lifting capacity of linkage is limited because the full weight upon the lift arm 13 is carried by the rectangular members 35, 38 upon the stop members 40.

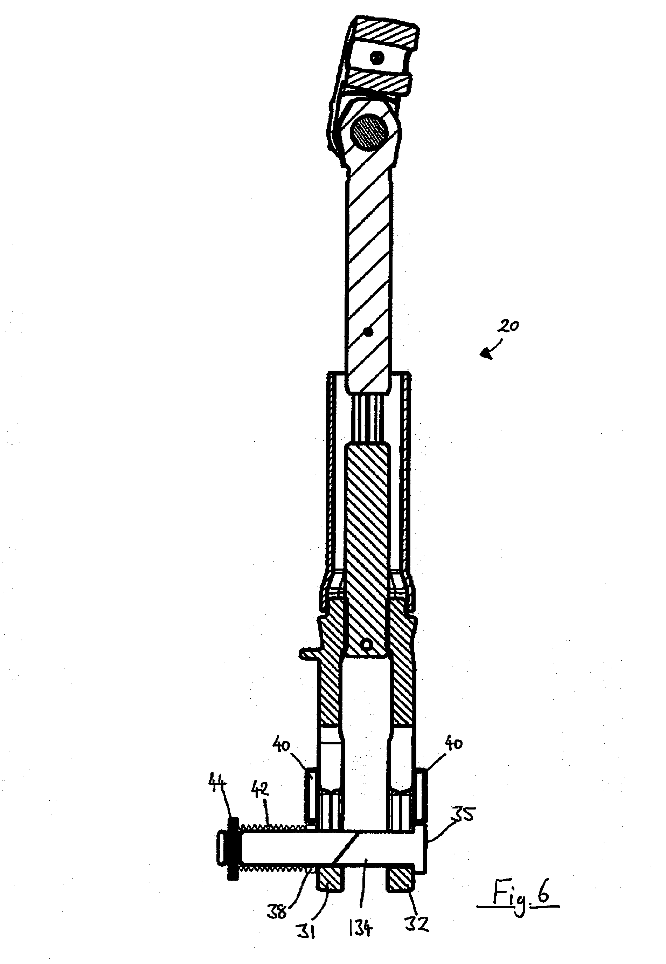

In a second embodiment illustrated in Figures 6 to 8, an alternative pin 134 is provided. The remaining components, which are the same as those described in the above embodiment, share like reference numbers for consistency.

Pin 134 is longer than pin 34 described above and can accommodate a coil spring 42 between rectangular washer 38 and a retaining clip 44 disposed on the far end of pin 134 remote from rectangular member 35.

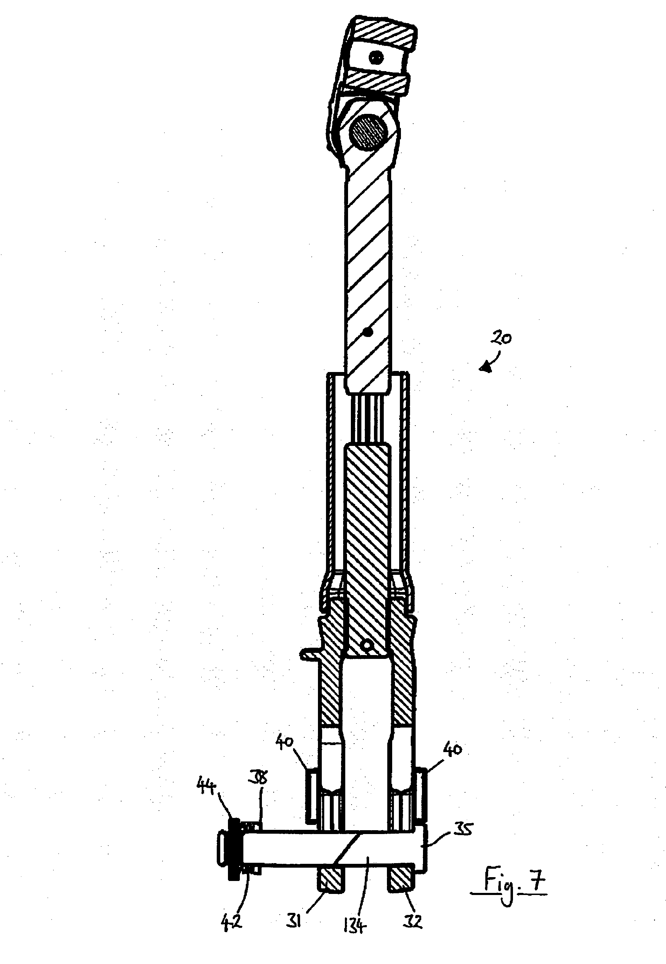

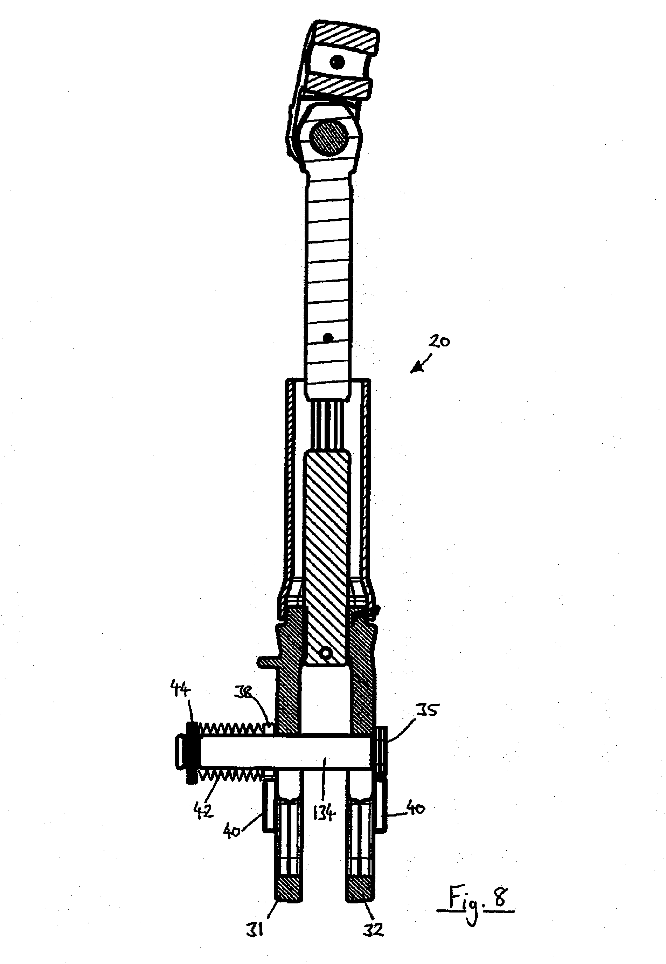

From the fixed operative mode shown in Figure 6, an operator moves rectangular washer 38 along bolt 134 clear of stop members 40 (as shown in Figure 7). Pin 134 is then slid to the right so that rectangular member 35 clears the corresponding stop member 40 in order to allow the lift arm 13 and bolt 134 to move upwardly in the slot 36. Once over the stop members 40, the washer 38 can be released so that the rectangular members 35, 38 can snap into position (Figure 8) under the force of spring 42.

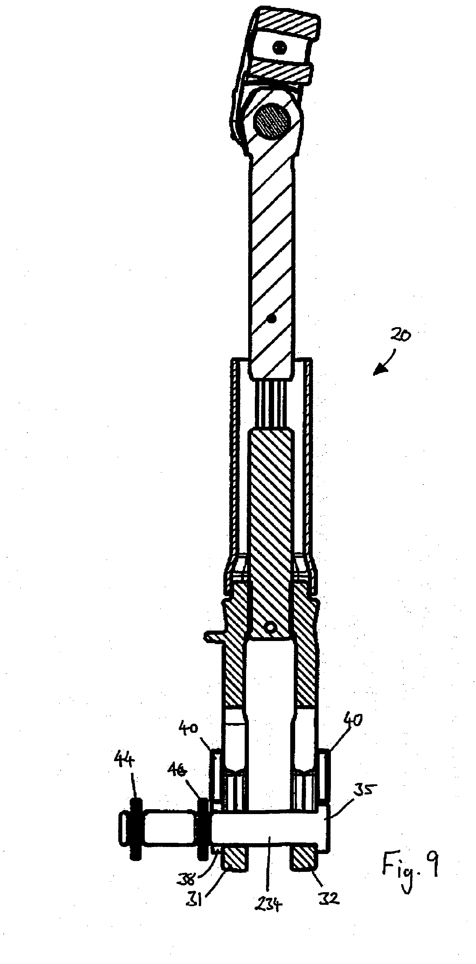

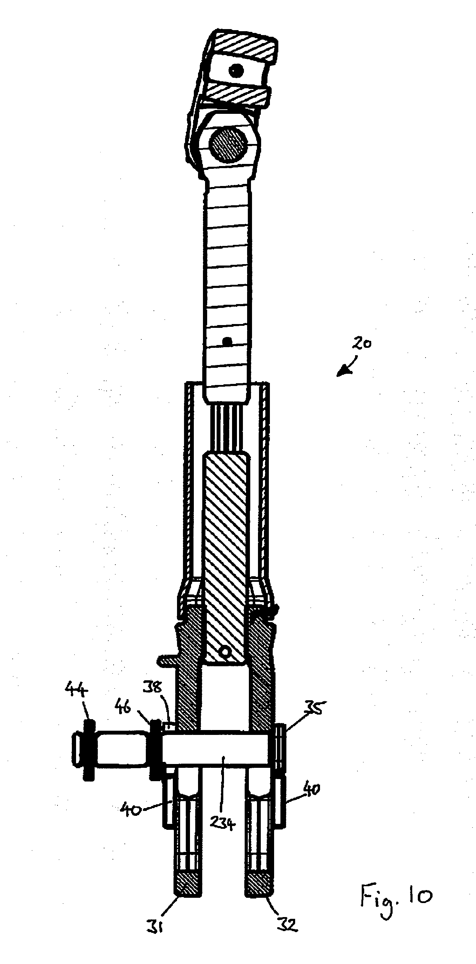

In a third embodiment illustrated in Figures 9 and 10, a further alternative bolt 234 is used together with different retaining means. In all three modes washer 38 is retained in position by an intermediate retaining clip 46 which is positioned immediately adjacent the washer 38. Pin 234 is of a sufficient length to permit the rectangular members 35, 38 to be slid clear of the stop elements 40 with the intermediate retaining clip 46 removed but the end retaining clip 44 still in position. This is more convenient for the operator and less cumbersome than the second embodiment described above.

In summary there is provided a tractor three-point linkage having three modes of operation is provided. Lower lift arms pivotally mounted to a chassis are raised and lowered by attached lift rods. Each lift rod comprises a pair of elongated slots through which a pin is inserted to secure the associated lift arm. Rectangular end members provided on the pin engage stop members provided on the lift rods to provide (a) a fixed operative position with the pin held at the bottom of the slots, (b) a fixed transport position with the pin held at the top of the slots, and (c) a floating operative position with the pin free to move up and down within the slots.

## Claims

1. A tractor linkage for mounting to a chassis (11), the linkage comprising a lift arm (13, 14) for pivotally mounting at one end on the chassis and comprising at the other end implement connector means, the linkage further comprising a lift rod (20) for connection at one end to a hitch actuator (22, 24) and connected at the other end to the lift arm (13, 14), wherein the lift rod (20) comprises a pair of downwardly-extending parallel jaw elements (31, 32) spaced apart to receive the lift arm (13, 14), wherein the arm is held within the pair of jaw elements (31, 32) by a pin which is inserted through elongated holes (36) provided in each jaw element (31, 32) and a hole (37) in the lift arm (13, 14), the pin (34, 124, 234) comprising at opposing ends retaining means (39, 44) and a rectangular end member (35), wherein the pin (34, 134, 234) can be located with respect to the jaw (31, 32) elements in:
(a) a *fixed operative* mode in which the pin (34, 134, 234) is secured at the bottom of the elongated hole (36) wherein a long edge of the rectangular member (35) abuts lower edges of respective stop elements (40) provided on the outside of the jaw elements (31, 32) positioned on either side of the elongated hole (36); and
(b) a *floating operative* mode in which the long edge is aligned with the elongated hole (36) so that the width of the rectangular member (35) fits between the stop elements (40) and is guided thereby to allow the pin (34, 134, 234) to move along the elongated hole (36); **characterized in that** the pin (34, 134, 234) can be located with respect to the jaw elements (31, 32) also in
(c) a *fixed transport* mode in which the pin (34, 134, 234) is secured at the top of the elongated hole (36) wherein a long edge of the rectangular member (35) abuts upper edges of the respective stop elements (40).

2. A tractor linkage according to Claim 1, wherein the pin (34, 134, 234) has disposed thereon a rectangular washer (38) between the retaining means (39, 44) and the lift rod (20), the washer (38) having a long edge which abuts respective stop elements (40) provided on the outside of the proximate jaw element (31, 32) positioned on either side of the elongated hole (36) when in the fixed operative mode and the fixed transport mode, and having a width that fits between the stop elements (40) when in the floating operative mode.

3. A tractor linkage according to Claim 1 or 2, wherein the retaining means comprises a sprung clip (39) inserted in a hole in the pin (34).

4. A tractor linkage according to Claim 2, wherein a coil spring (42) is disposed on the pin (134) in compression between the retaining means (44) and the rectangular washer (38).

5. A tractor linkage according to Claim 2, wherein intermediate retaining means (46) are provided on the pin (234) immediately adjacent the rectangular washer (38), the pin (234) being of a sufficient length to permit the rectangular end member (35) to be slid clear of the stop elements (40) with the intermediate retaining means (46) removed and the end retaining means (44) in place.

6. An agricultural tractor comprising a linkage according to any preceding claim, the tractor comprising a chassis (11) to which two lift arms (13, 14) are pivotally attached at the rear of the tractor and a drawbar centrally located between two lift arms (13, 14).

## Patentansprüche

1. Verbindungseinrichtung für einen Traktor oder ein Zugfahrzeug zur Befestigung an einem Chassis (11) mit einem Hubarm (13, 14) für eine verschwenkbare Befestigung an einem Ende an dem Chassis und einem Verbindungsorgan für eine Kupplung oder ein Anbaugerät an dem anderen Ende, wobei die Verbindungseinrichtung eine Hubstange (20) für eine Verbindung an einem Ende eines Kupplungs- oder Anbaugerät-Aktuators (22, 24) aufweist, welche an dem anderen Ende mit dem Hubarm (13, 14) verbunden ist, wobei die Hubstange (20) ein Paar von sich nach unten erstreckenden parallelen Backenelementen (31, 32) aufweist, die zur Aufnahme des Hubarms (13, 14) voneinander beabstandet sind, wobei der Hubarm in dem Paar der Backenelemente (31, 32) durch einen Pin gehalten ist, der durch Langlöcher (36) in jedem Backenelement (31, 32) und ein Loch (37) in dem Hubarm (13, 14) eingesetzt ist, wobei der Pin (34, 134, 234) an gegenüberliegenden Enden Haltemittel (39, 44) und ein rechteckiges Endelement (35) aufweist, wobei der Pin (34, 134, 234) hinsichtlich der Backenelemente (31, 32) angeordnet werden kann in:
a) einem festen Betriebsmodus, in dem der Pin (34, 134, 234) an dem Boden des Langlochs (36) befestigt oder gesichert ist, wobei ein Längsrand des rechteckigen Elements (35) an unteren Rändern zugeordneter Stoppelemente oder Anschläge (40), die an der Außenseite der Backenelemente (31, 32) bereitgestellt sind und die auf beiden Seiten des Langlochs (36) angeordnet sind, anliegt;
b) einem fließenden oder beweglichen Betriebsmodus, in dem der Längsrand zu dem Langloch (36) ausgerichtet ist, so dass die Breite des rechteckigen Elements (35) zwischen die Stoppelemente oder Anschläge (40) passt und hierdurch geführt ist, um zu ermöglichen, dass sich der Pin (34, 134, 234) entlang des Langlochs (36) bewegen kann,
**dadurch gekennzeichnet, dass** der Pin (34, 134, 234) hinsichtlich des Backenelements (31, 32) ebenfalls angeordnet werden kann in
c) einem fixierten Transportmodus, in dem der Pin (34, 134, 234) an der Oberseite des Langlochs (36) befestigt oder gesichert ist, wobei ein Längsrand des rechteckigen Elements (35) an oberen Rändern der zugeordneten Stoppelemente oder Anschläge (40) anliegt.

2. Verbindungseinrichtung nach Anspruch 1, wobei der Pin (34, 134, 234) zwischen dem Haltemittel (39, 44) und der Hubstange (40) eine darauf angeordnete rechteckige Scheibe (38) besitzt, wobei die Scheibe (38) einen Längsrand besitzt, welcher in dem fixierten Betriebsmodus und dem fixierten Transportmodus an zugeordneten Stoppelementen oder Anschlägen (40) anliegt, die an der Außenseite des proximalen Backenelements (31, 32) vorgesehen sind und auf beiden Seiten des Langlochs (36) angeordnet sind, und wobei die Scheibe eine Breite besitzt, die in dem fließenden oder beweglichen Betriebsmodus zwischen die Stoppelemente oder Anschläge (40) passt.

3. Verbindungseinrichtung nach Anspruch 1 oder 2, wobei das Haltemittel einen Federclip (39) aufweist, der in ein Loch des Pins (34) eingesetzt ist.

4. Verbindungseinrichtung nach Anspruch 2, wobei zwischen dem Haltemittel (44) und der rechteckigen Scheibe (38) eine gewickelte Feder (42) mit Vorspannung an oder auf dem Pin (134) angeordnet ist.

5. Verbindungseinrichtung nach Anspruch 2, wobei unmittelbar benachbart der rechteckigen Scheibe (38) zwischengeordnete Haltemittel (46) an dem Pin (234) vorgesehen sind, wobei der Pin (234) eine hinreichende Länge besitzt zur Ermöglichung, dass das rechteckige Endelement (35) von den Stoppelementen oder Anschlägen (40) weg verschoben oder gleitend bewegt werden kann, wenn das zwischengeordneten Haltemittel (46) beseitigt ist und das endseitige Haltemittel (44) an seinem Bestimmungsort ist.

6. Landwirtschaftliches Zugfahrzeug oder Traktor mit einer Verbindungseinrichtung nach einem der vorhergehenden Ansprüche, wobei der Traktor oder das Zugfahrzeug einen Chassis (11) aufweist, an welchem zwei Hubarme (13, 14) schwenkbar an einer Rückseite des Traktors oder Zugfahrzeugs befestigt sind und eine Zugstange zentral zwischen den beiden Hubarmen (13, 14) angeordnet ist.

## Revendications

1. Attelage de tracteur destiné à être monté sur un châssis (11), l'attelage comprenant un bras de levage (13, 14) destiné à assurer le montage à une première extrémité avec possibilité de pivotement sur le châssis et comprenant, à l'autre extrémité, un moyen de liaison d'outillage, l'attelage comprenant en outre une tige de levage (20) destinée à assurer à une première extrémité une liaison avec un actionneur d'attelage (22, 24) et reliée à l'autre extrémité au bras de levage (13, 14) ; dans lequel la tige de levage (20) comprend une paire d'éléments formant mâchoires parallèles (31, 32) s'étendant vers le bas, séparés l'un de l'autre afin de recevoir le bras de levage (13, 14) ; dans lequel le bras est maintenu à l'intérieur de la paire d'éléments formant mâchoires (31, 32) par une broche (34, 134, 234) qui est insérée à travers des orifices allongés (36) agencés sur chaque élément formant mâchoire (31, 32) et un orifice (37) sur le bras de levage (13, 14), la broche (34, 134, 234) comprenant, à des extrémités opposées, des moyens de retenue (39, 44) et un élément d'extrémité rectangulaire (35) ; dans lequel la broche (34, 134, 234) peut être placée, par rapport à l'élément formant mâchoire (31, 32), dans :
(a) un mode de fonctionnement fixe dans lequel la broche (34, 134, 234) est fixée au niveau de la partie inférieure de l'orifice allongé (36), dans lequel un bord allongé de l'élément rectangulaire (35) vient en butée sur les bords inférieurs d'éléments d'arrêt respectifs (40) agencés sur l'extérieur des éléments formant mâchoires (31, 32) positionnés de chaque côté de l'orifice allongé (36) ; et
(b) un mode de fonctionnement flottant dans lequel le bord allongé est aligné avec l'orifice allongé (36) de telle sorte que la largeur de l'élément rectangulaire (35) est telle qu'il s'assemble entre les éléments d'arrêt (40) et est ainsi guidé de manière à permettre le déplacement de la broche (34, 134, 234) le long de l'orifice allongé (36) ; **caractérisé en ce que** la broche (34, 134, 234) peut aussi être positionnée par rapport aux éléments formant mâchoires (31, 32), également dans
(c) un mode de transport fixe dans lequel la broche (34, 134, 234) est fixée à la partie supérieure de l'orifice allongé (36) dans lequel un bord allongé de l'élément rectangulaire (35) vient en butée contre les bords supérieurs des éléments d'arrêt respectifs (40).

2. Attelage de tracteur selon la revendication 1, dans lequel la broche (34, 134, 234) comporte une rondelle rectangulaire (38) disposée sur le dessus, entre les moyens de retenue (39, 44) et la tige de levage (20), la rondelle (38) présentant un bord allongé qui vient en butée contre des éléments d'arrêt respectifs (40) agencés sur l'extérieur de l'élément proximal formant mâchoire (31, 32) positionnés de chaque côté de l'orifice allongé (36), lorsqu'elle est dans le mode de fonctionnement fixe et le mode de transport fixe, et présentant une largeur telle qu'elle s'assemble entre les éléments d'arrêt (40) lorsqu'elle est dans le mode de fonctionnement flottant.

3. Attelage de tracteur selon la revendication 1 ou 2, dans lequel le moyen de retenue comprend une pince élastique (39) insérée dans un orifice formé sur la broche (34) ;

4. Attelage de tracteur selon la revendication 2, dans lequel un ressort hélicoïdal (142) est agencé sur la broche (134), en compression entre le moyen de retenue (44) et la rondelle rectangulaire (38).

5. Attelage de tracteur selon la revendication 2, dans lequel des moyens de retenue intermédiaires (46) sont agencés sur la broche (234) de manière immédiatement adjacente à la rondelle rectangulaire (38), la broche (234) étant d'une longueur suffisante pour permettre à l'élément d'extrémité rectangulaire (35) de coulisser librement par rapport aux éléments d'arrêt (40), le moyen de retenue intermédiaire (46) étant retiré et le moyen de retenue d'extrémité (44) étant en place.

6. Tracteur agucole comprenant un attelage selon l'une quelconque des revendications précédentes, le tracteur comprenant un châssis (11) sur lequel deux bras de levage (13, 14) sont fixés de manière à pouvoir pivoter à l'arrière du tracteur et une barre de traction située de manière centrale entre les deux bras de levage (13, 14).
